# EUROPEAN PATENT SPECIFICATION

(11) **EP 1 744 991 B1**
(45) Date of publication and mention of the grant of the patent: **03.10.2012**
(21) Application number: 05715144.1
(22) Date of filing: 01.04.2005
(51) Int. Cl.: C02F 1/44, C02F 1/32, B01D 61/02, B01D 61/04, B01D 61/14, B01D 61/58, C02F 103/42

(54) **A METHOD AND A SYSTEM FOR PURIFYING WATER FROM A BASIN, IN PARTICULAR A SWIMMING POOL**
VERFAHREN UND SYSTEM ZUR REINIGUNG VON WASSER AUS EINEM BECKEN, INSBESONDERE EINEM SCHWIMMBECKEN
PROCEDE ET SYSTEME DE PURIFICATION D'EAU DANS UN BASSIN, EN PARTICULIER UNE PISCINE

(30) Priority: 10.05.2004 DK 200400740
(43) Date of publication of application: 24.01.2007
(73) Proprietor: SRLight ApS, 7400 Herning (DK)
(72) Inventor: Povl, Kaas, 7400 Herning (DK)
(74) Representative: Elmeros, Claus
(86) International application number: PCT/DK2005/000226
(87) International publication number: WO 2005/108313

(56) References cited:
- EP-A- 0 941 967
- EP-A- 1 057 784
- DE-C1- 10 211 318
- PATENT ABSTRACTS OF JAPAN vol. 1995, no. 11, 26 December 1995 (1995-12-26) & JP 07 195097 A (TORAY IND INC), 1 August 1995 (1995-08-01)
- BERNHARD G: "LE TRAITEMENT DES EAUX DE PISCINE" CFP CHAUD FROID PLOMBERIE, EDITIONS PARISIENNES. PARIS, FR, vol. 46, no. 536, 1 May 1992 (1992-05-01), pages 85-90, XP000267251 ISSN: 0750-1552
- BERNHARDT H: "DESINFEKTION AUFBEREITETER OBERFLACHENWASSER MIT UV-STRAHLEN. ÖKONSEQUENZEN FUR DIE WASSERVERSORGUNG AUS DEN ERGEBNISSEN DES F- UND E-VERBUNDVERHABENS", 1 December 1994 (1994-12-01), GWF WASSER ABWASSER, 971956 2, PAGE(S) 677 - 689, XP000482290, ISSN: 0016-3651

## Description

The present invention relates to a method and a system for purifying water from a basin, in particular a swimming pool.

For swimming pools and similar bathing facilities, it is required that recirculating water is filtered for removing contaminating particles. The most common method of filtering the water is sand filtering with the addition of a flocculation chemical for removing colloidal particles and nutritive salts from the water.

In order to achieve the required filtration, one or more sand filters must be provided in the water purification plant for ensuring a sufficient filtration capacity. Since such sand filters are large, this filter system requires a considerable amount of space and consequently requires a large amount of service room in connection with the pool installation to accommodate the water purifying system. The sand filters are regularly cleaned by providing a return flow of quite large amounts of water with a flow rate of between 40 m/m²/h and 70 m/m²/h in order to remove the filtered particles retained by the sand filter. This flow rate and the necessary water amount require a large pumping capacity. In order to protect and ensure the efficiency of the filter pumps, a mechanical filter is mounted upstream the pumps to remove hair and similar large particles.

In the later years, much has been done to process the return water from the sand filters so that it can be recycled as supply water to the pool. The most common method is to subject the return water to a membrane filtering. Since reservoirs for collecting the return water before the membrane filtering process, this method both requires a considerable amount of space just as it is expensive to install the necessary equipment for this treatment.

Moreover, the existence of heath risks in relation to swimming pools is a well-known problem, such as virology aspects, human-pathogen microfungus aspects, protozoa aspects, THM (trihalomethanes), AOX (Adsorbable Organic Halogens) and EDC (Endocrine Disrupting Compounds) aspects.

Therefore it is also a requirement that.the water for use in swimming baths must be supplied with oxidation means after the filtration, which has the function of quickly destroying of germs within a few seconds. A requirement for the disinfection according to the German Industrial Standard DIN 19643 is a reduction n the Pseudomonas aeruginosa with a factor of 10.000 in under 30 seconds. Moreover, the oxidation means provides in high oxidation energy for germ destruction and inactivation of virus as well as oxidation of harmful organic substances.

The preferred oxidation means which satisfies these requirements is chloride. The content of free chloride is prescribed to be at least 0.3 mg/l for ordinary pools and 0.7 mg/l for warm water pools. In practise a content of between 0.5 to 3.0 mg/l is used depending on the type of pool. By the addition of chloride, growth of bacteria in the water, the sand filters and the pipe systems are prevented just as the free chloride is disinfecting.

The use of chloride has some disadvantages, as the chloride reacts with e.g. urine in the water and produces chloramine compounds. These compounds cause an unpleasant smell and irritate eyes, the mucous membrane and skin of the swimmers.

In DK-B-144.663 there is described a method of removing chloramines from chlorinated water in swimming pool by intensively radiation of the water with ultraviolet light at a wavelength above 300 nm.

From DE 2 754 488 it is known to use an activated carbon filter to reduce the amount of chloramines. By a subsequent radiation with ultraviolet light having a wavelength of 253.7 nm, a sterilisation of the water is achieved.

By the addition of chloride, not only chloramines but also trihalomethanes (THM) and Adsorbable Organic Halogens (AOX) are produced. Although this does not result in problems with respect to smell or irritation, but may be allergising and carcinogenic.

The processing of water containing these halogen compounds according to the method described in DK-B-144.663 does not result in a sufficient reduction of the content of these compounds so that the water from swimming pools meet the requirements in many countries with respect to limiting contents for the content of THM and AOX.

In attempt to reduce the content of THM, AOX and chloramines, water is led from the swimming pool through a sand filter where the top layer contains activated carbon.

This method is disadvantageous as the return flow rinsing of the sand filter - which is normally done every second day - results in a rinsing of activated carbon. Besides the loss of activated carbon by the return flow rinsing, the method is disadvantageous as the carbon in the form of slurry is discharged into the draining system, which normally is not allowed.

From WO 99/33752, a method of purifying chlorinated water from a swimming pool is known, whereby the water is led through a filter, such as a sand filter and a sub-flow of this filtered water is subjected to a UV radiation with wave lengths, which correspond to the absorption energy level for the compounds, particularly chloramines and similar chlororganic compounds present in the water, typically between 190 to 465 nm. From this radiated sub-flow a second sub-flow is led through a membrane filter wherein the water is subjected to a nano-filtration or reverse osmosis process. The membrane filter is utilised to remove the content of THM and AOX in the water.

In operation, it is realised that by the method according to WO 99/33752, the quartz tubes of UV high pressure lamps in the photochemical radiation system very quickly is covered by a coating and thereby prevents the UV radiation from penetrating out and into the water. In order to remove phosphate (PO₄), which is nutritional for creation of algae in the water flocculation chemicals are added before the sand filters and in some circumstances sodium bicarbonate (Na(HCO₃)₂) is added for regulating the acid capacity (K_{S4,3}) and sometimes sulphuric acid (H₂SO₄) is used for ph regulation. These additives contribute to the creation of these coatings on the lamp tubes. By the addition of fresh water compounds are also added which contribute to the creation of these coatings on the lamp tubes. The coatings contain calcium sulphate (CaSO₄(2 H₂0)) and/or calcium carbonate (CaCO₃) and/or superfluous flocculation chemicals.

It is also attempted to reduce the content of THM, AOX and chloramines by feeding the chlorinated water from the pool through one or more sand filters and then feeding the water from the sand filters through one or more absorption filters, preferably activated carbon filters. By this water purification process, the absorption filters usually have a durability of maximum 6 to 12 months, and then the absorption material must be changed. By this method, the absorption filters serve as a multiplication site for micro organisms, such as bacteria and viruses from the water.

It is normal that an absorption filter is flow rinsed approx. every third day by a return flow of chlorinated water. In some circumstances every day without being able to disinfect the absorption mass.

When the absorption mass is coated with a bio-film and is completely contaminated with bacteria, a regeneration and/or disinfection of the absorption filer by a return flow is performed with water having a large molecular chlorine content (> 10 mg/l molecular chlorine measured as HOCI). Even by return flow rinsing water with such large molecular chlorine content a full disinfection of the absorption filer is not achieved, since this return flow rinsing does not remove the bio-film which the bacteria feed on and protects them from the impact of the chlorine. This poor disinfection of the absorption mass results in a frequent exchange of the absorption mass. It is attempted to remove this disadvantage by return flow rinsing the absorption filters by strongly acidic water for in this manner to remove the bio-film, but neither this rinsing method has resulted in a full disinfection.

Consequently, it is recognised that it is not possible to disinfect the absorption filters with chemicals. Therefore, the guidelines for water processing of bath water from absorption filters is forwarded to an equalizing tank before the sand filters and not to the pool in order to avoid contamination of the pool with unwanted pathogenic bacteria etc.

When using the method this results in an unwanted contamination of the sand filters. To avoid this, the sand filters are backflow rinsed with a flow rate of the return rinsing water at between 40 m/m²/h and 70 m/m²/h for 5 min. to 10 min. This corresponds to between 4 m³ and 8 m³ return rinsing water per square meter of sand filter surface. The use of clean water is often associated with high costs and the total costs of the prescribed water purification methods are accumulated.

The German patent DE10211318C1 describes a process for treating swimming pool water by adding activated carbon powder, subsequent membrane filtration and irradiation of the resulting permeate stream with ultraviolet light. In DE10211318C1 the total water stream is irradiated before being directed back into the swimming pool.

The object of the invention is to provide a method and a system for purifying water from a basin without the above-mentioned drawbacks, in particular which is more cost-effective in operation as well as in installation.

This object is achieved by a method and system according to claims 1 and 13.

By the invention a membrane filtration solution is provided with photochemical treatment for purifying the water, whereby the use of large sand filters can be avoided. A system according to the invention is relatively compact due to the avoidance of sand filters. This means that only a small installation space is required. It is by the invention realised that the system and method may be used for purifying different types of water, i.e. not only bath water from swimming pools but also waste water e.g. from domestic households, contaminated water, etc.

By the invention, an efficient removal of THM, AOX, EDC and PO₄ as well as micro organisms with only a minimum of molecular chlorine in the bath water. The THM and AOX become bound to particles or are of a size, which can be separated by the membrane filtration. The genuinely solved THM and AOX and other compounds which pass through the membrane of the filter means are destroyed by the subsequent photooxidation process. The purifying of the water may be achieved without leaving coatings on the lamps in the photochemical processing system.

By the invention, there is achieved an inactivation of bacteria, vira, micro fungi and protozoa and a complete removal of bio-film and THM, AOX and EDC from the pressure membrane filter systems and the absorption filter, whereby the active carbon becomes regenerated and disinfected by thermal heating.

Another advantage of the invention is that it becomes possible to reduce the use of molecular chlorine in swimming pool water from approx. 0.80 mg/l as it is normal by the prior art systems to approx. 0.30 mg/l whilst keeping the THM, AOX and EDC below the prescribed limit values. This in turn means that the water becomes more pleasant for bathing, just as the content of bacteria, vira, micro fungi and the like is substantially reduced. The redox value is also increased significantly.

Other advantages may be achieved by a method according to the invention, as explained below. The membrane solution operates with pressure difference as the driving force causing the water flow through the membrane filter means and the sub-flows through the other processing treatments. In the photochemical treatment where the water (H₂O) is split up into OH· radicals, extra oxidation energy may be supplied by adding e.g. chlorine (Cl₂), chlorine dioxide (ClO₂), hydrogen peroxide (H₂O₂) or anodic oxidation. A reverse osmosis membrane filter and/or an absorption filter may be provided so that the main flow of water from the basin is passed through after having passed a vacuum or pressurised membrane filter.

Preferably, the membrane filter is a vacuum membrane filter with membranes of the type "open ultrafiltration membranes" or a "close microfiltration membranes" with sequential return flow rinsing during operation. By the vacuum membrane filter, the pumping means can be provided downstream the filter, whereby separate pre-filters for the pumping means can be avoided. The membranes of the vacuum membrane filter remove particles smaller than 3.0-0.001 µm. Moreover, air bubbles may be provided under the vacuum membranes in order to oscillate the membranes. The air supply also effects an elimination of THM, AOX and EDC from the water. By the oscillations accumulations of coating material on the vacuum membrane is avoided so that the circulating main flow is not stopped. The hydraulic distribution of chlorine in the bath water in a swimming pool is maintained during return flow rinsing.

In a preferred embodiment of the invention, the membrane filter means includes first membrane filter means including a vacuum membrane filter; and second membrane filter means including a pressure membrane filter for nano-membrane filtration. The vacuum membrane filter may be configured with hollow fibres or spiral wound fibres either in a plate frame or en a tube configuration. In the hollow fibre configuration, the openings may be symmetric or asymmetric and the skin side of the hollow fibres in the membrane filter means may be either the inside or the outside of the hollow fibres. The membrane material may be an organic or inorganic material. These and other variants in the design of the membrane filtration means may be provided without departing from the scope of the present invention.

It is found that by a system and method according to the invention where a full membrane filter solution is provided with photochemical treatment reduces the required volume of the utility room by more than 50% compared to the water purifying sand filter installations known to day, just as the usage of water, energy and chemicals are significantly reduced as well as the quality of the water is very good with a molecular chlorine content of HOCI between 0.2 to 0.3 mg/l.

In a preferred embodiment of the invention, at least one of the filters in the filtration system, in particular the membrane filter means and the absorption filter, are disinfected and/or regenerated by passing chloride water heated to a temperature of 70°C to 120°C through the filter, more preferably approx. 80°C for 10 to 120 minutes, most preferably approx. 20 minutes. Hereby, it is found that a comprehensive disinfection of the nano-membrane filter means, as well as the photochemical system and the absorption filter and/or the reverse osmosis membrane filter may be achieved. By this embodiment, it is found that it is possible to completely avoid the use of flocculation chemicals in order to filter PO₄ from the pool water.

The invention is described in more detail in the following with reference to the figures, in which:
- Fig. 1: shows a diagram of a conventional filtration system,
- Figs. 2 and 3: show a diagram of a water purification system according to a first embodiment of the invention;
- Fig. 4: shows a diagram of a water purification system with a vacuum membrane filter according to a second embodiment of the invention;
- Fig. 5: shows a diagram of a water purification system with a pressure membrane filter according to a third embodiment of the invention;
- Figs. 6 and 7: show a diagram of a preferred fourth embodiment of the invention;
- Figs. 8 and 9: show a diagram of a preferred fifth embodiment of the invention; and
- Fig. 10: shows a diagram of a sixth embodiment of the invention.

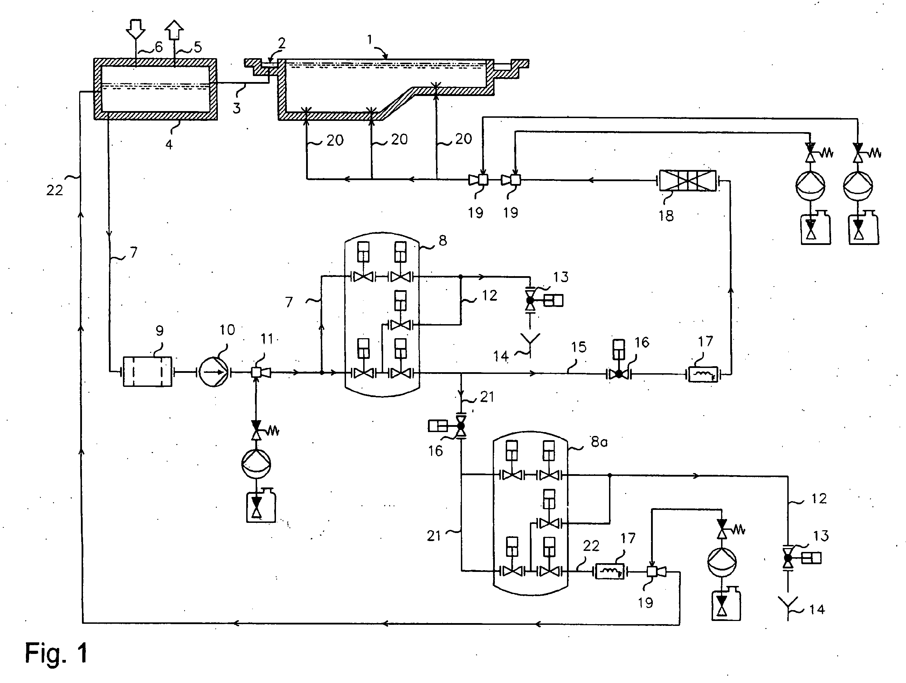

Figure 1 shows the filtering system in a conventional filtration system according to prior art. The system a water basin, such as a swimming pool 1 with an overflow drain 2, which through a flow path 3 is connected to a compensation tank 4. The compensation tank 4 is provided with a ventilation duct 5 and a fresh water supply 6 at the top of the tank 4. At the bottom of the tank 4, a flow pipe 7 is provided, which is connected to a sand filter 8. In this flow piping 7, there is provided a pre-filter, such as a hair filter 9, and a feeding pump 10. Downstream the feeding pump 10 and before the sand filter 8 there is provided a dosage injector 11 for addition of flocculation chemicals. The sand filter 8 is connected to an outlet flow pipe 15 for the filtered water. The sand filter 8 is moreover provided with a drain flow pipe 12 which via a valve 13 is directed to a drain 14. The flow pipe 15 is via a regulating valve 16, a flow meter 17 and a heat exchanger 18 connected to one or more return inlet pipes 20 for returning the filtered water to the pool 1. Before the inlet pipes 20 one or more dosage injectors 19 are provided, preferably two: one for addition of chlorine and one for addition of pH regulating chemicals to the filtered water before being returned to the pool 1.

Downstream the sand filter 8 in the flow pipe 15 is provided with a regulating valve 16 and a sub-flow pipe 21 is provided, which via a regulating valve 16 branches off a sub-flow from the main flow in the pipe 15, and feeds this sub-flow into an active carbon sand filter 8a. The carbon filter 8a is provided with a drain flow pipe leading separated material from the filter 8a to a drain 14, said discharge being controlled via a regulating valve 13. The water processed in the filter 8a is returned to the compensation tank in a flow pipe 22 via a flow meter 17 and a chemical dosage injector 19 for addition of chlorine.

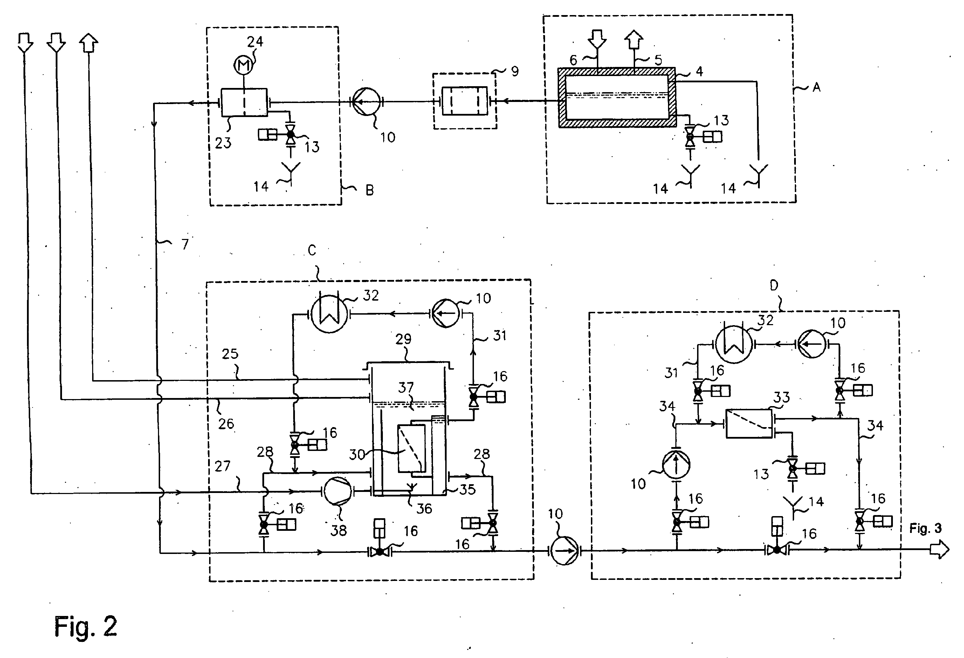

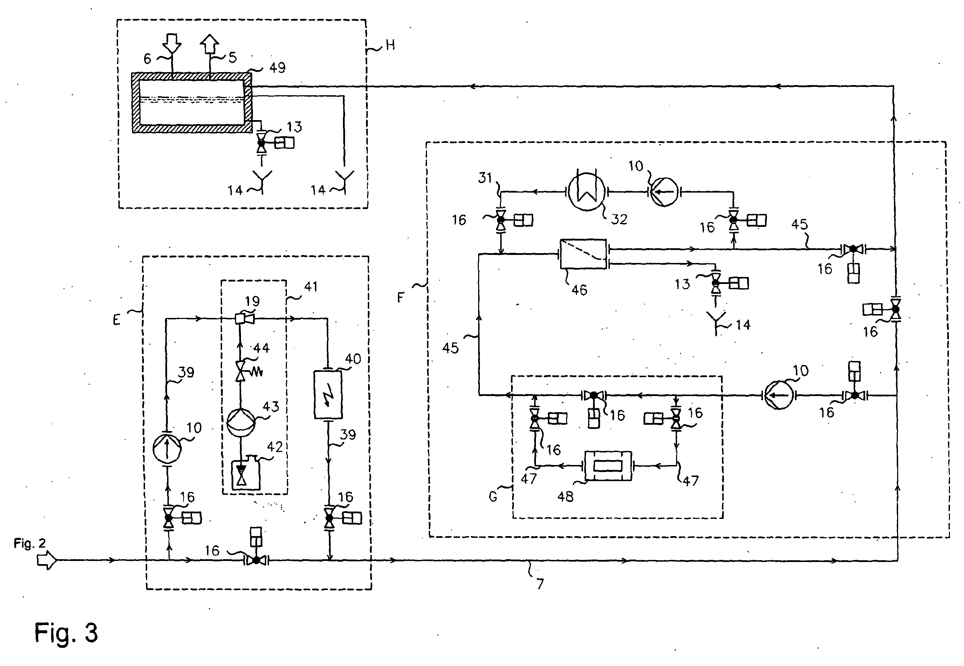

In figures 2 and 3, a schematic diagram of an embodiment of a filtration system according to the invention is shown, illustrating the combination possibilities of the sections A-H available by the filtration system according to the invention. The tank section A, includes a tank 4, with fresh water supply 6, air ventilation 5 and draining means.

The water is pumped from the tank 4 through pre-filer means in section B by a pump 10, which upstream is protected by a first pre-filter, such as a hair filter 9 adapted to separate particles of more than 1 mm. In section B, one or more further mechanical pre-filters 23 may be provided, adapted to separate particles of more than e.g. 1 µm. The mechanical filter 23 may be provided with filter driving means 24 for cleaning the filter 23 and a drain.

In the flow pipe 7 the main flow of water is forwarded to section C comprising the first membrane filtration means. In the section C, from the main flow in the flow pipe 7, a first sub-flow is taken out for membrane filtration in the membrane filter 29, which preferably is adapted to separate particles and substances more than 0.001 µm in size from the water flow. This first sub-flow is at least a partial flow of the main water flow, preferably maximum 50% thereof. The membrane filter 29 includes a membrane element 30 which is submerged in water 37 in the filter container. An air outlet pipe 25, a fresh water inlet pipe 26 and an air inlet pipe 27 are provided to supply of fresh water and air to the filter 29 and ventilation of air. The air is fed from the air inlet pipe via an air pump 38 into the water below the membrane element 30 in the air inlet 36 in such a manner that the air bubbles up and binds THM and some AOX in the water, whereby these substances can be retained in the membrane filter element 30. The membrane filter 29 comprises a vacuum compartment 35. The membrane filtered water is drawn through the membrane filer element and into this vacuum compartment 35 and discharged from the filter in the first sub-flow pipe 28. The vacuum membrane filter 37 is preferably provided with hollow fibres, but could be other types of membrane filter elements.

The filter 29 may preferably be provided with a thermal disinfection system including a disinfection flow pipe 31 which via a regulating valve 16 and a separate pump 10 forwards the water flow through a heat exchanger 32 and returns the water in this disinfection flow pipe 31 from the downstream side of the filter 29 to the upstream side, so that the membrane filter 29 is subjected to the heated water in the disinfection flow pipe 31. Hereby, it is found that a 100% disinfection of the membrane filter system may be achieved by return flow rinsing with chlorine water heated to a temperature of 70-120°C for 10 to 120 min.

In order to drive the vacuum membrane filter means, a pump 10 is preferably provided downstream the vacuum filter means C.

A section D which is a second membrane filtration means may be inserted in the main flow 7 either instead of the vacuum membrane filter in section C or together with section C.

In section D, a pressure nano-membrane filter 33 is provided. The membrane in this filter 33 is adapted for filtration of > 0.001 µm. A second sub-flow 34 is diverted from the main flow pipe 7 by controlling the relevant regulating valves 16. This second sub-flow is at least a partial flow of the main water flow, preferably maximum 50% thereof. A feeding pump 10 is inserted in the sub-flow 34 feeding the sub-flow of water through the nano-membrane filter 33. This filter 33 may also be thermally disinfected by providing a sub-string including a disinfection flow pipe 31 and a heat exchanger for heating the flow of water being returned from the clean side and back into the filter 33.

If two membrane filter means are utilised these may be of different filtering size, in order to ensure a sufficient capacity. Accordingly, at least one of the filter means C, D - preferably both - are provided with membrane filter elements 29, 33 with a nano-membrane for nanofiltration of the water.

Nanofiltration is a form of filtration that uses membranes to preferentially separate different fluids or ions. Nanofiltration is not as fine a filtration process as reverse osmosis, but it also does not require the same energy to perform the separation. Nanofiltration also uses a membrane that is partially permeable to perform the separation, but the pores of the membrane are typically larger than the membrane pores that are used in reverse osmosis.

After the nano-membrane filtration, the section E photochemical processing means are provided (see fig. 3). A third sub-flow 39 is branched off from the main flow 7 and via a regulating valve 16 and a feeding pump 10 the water is passed through an UV radiation tank 40 for subjecting the membrane filtered water to a photochemical treatment by radiating the water with ultraviolet radiation of predetermined wavelengths of polychromatic UV-light. This third sub-flow is at least a partial flow of the main water flow, preferably maximum 50% thereof. Before being entered into the UV-radiation tank 40, the water in the sub-flow 39 passes a dosage system 41 for addition of oxidation chemicals. The dosage system comprises a dosage injector 19, a regulating valve 44 and pumping means 43 feeding the chemical from the container 42 to the injector 19 in a predetermined amount. By the photochemical treatment, most if not all THM, AOX, EDC and chloramines and amino acids in the water are decomposed.

Downstream the photochemical treatment system, sections F comprising osmosis filter means, and section G comprising absorption filter means are provided in the main flow path 7. A fourth sub-flow 45 is taken out of the main flow path 7 via controlling relevant regulating valves 16 and a sub-system pump 10. This fourth sub-flow is at least a partial flow of the main water flow, preferably maximum 50% thereof. The water of this fourth sub-flow is passed through at least one reverse osmosis filter 46 and returned to the main flow 7. If more capacity may be required, a plurality of reverse osmosis filters 46 may be arranged in parallel or in series in this sub-flow path 45. A drainage system for discharging the retained particles in the osmosis filter is also provided. The reverse osmosis filter 46 may be provided with a thermal disinfection flow string, as explained above in relation to the membrane filters.

In the embodiment shown in fig. 3, absorption filter means (section G) are inserted in the fourth sub-flow 45. Accordingly, a fifth sub-flow 47 is branched off and at least a partial flow of the fourth water flow (preferably maximum 50% thereof) is passed through the absorption filter 48. This absorption filter 48 is an active carbon filter.

The absorption filter may have two functions. If - as shown in the figures - it is provided before the reverse osmosis membrane filter 46, its function is to absorb potential oxidation chemicals that is not decomposed in the photochemical treatment, i.e. a so-called "police filter" as the membranes in the reverse osmosis membrane filter 45 do not withstand the oxidation chemicals.

If the absorption filter is installed instead of a reverse osmosis membrane filter, its purpose is to absorb potential THM, AOX and EDC that are not decomposed in the photochemical treatment system.

The filtered water is returned to a return tank 49, generally referred to as section H. This return tank 49 may be a swimming pool, the tank 4 where the water was taken out of or a separate water storage reservoir or tank. Although not shown in fig. 3 in a swimming pool installation, the main flow path 7 may preferably be provided with a heat exchanger 18 for adjusting the temperature of the water before it being returned to the pool 49. Moreover, chemical dosage injectors 19 may be provided for adjusting the chlorine content and the pH-value of the filtered water immediately before the water is returned to the pool 49.

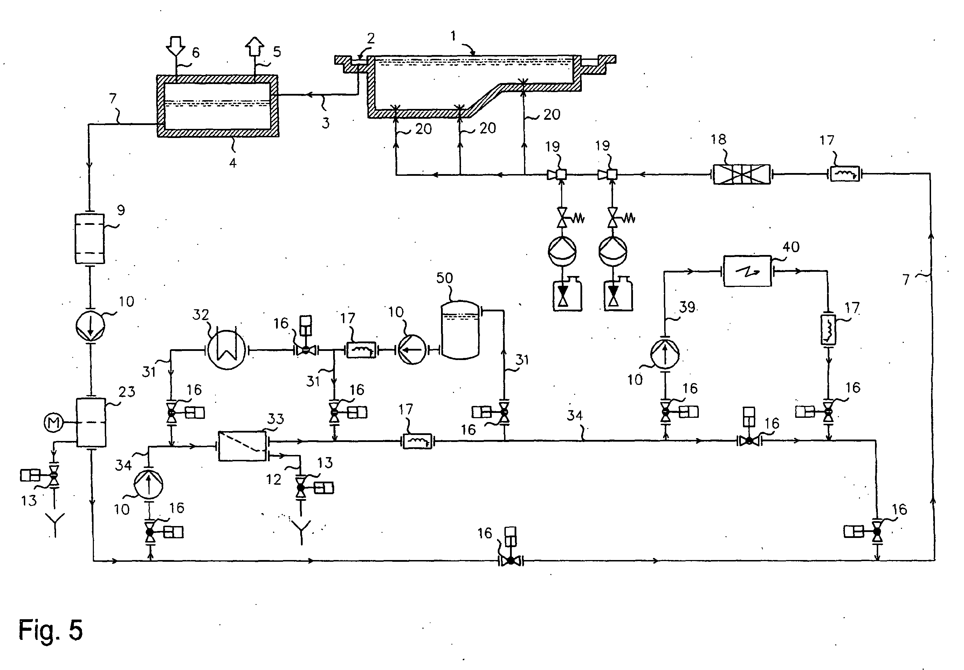

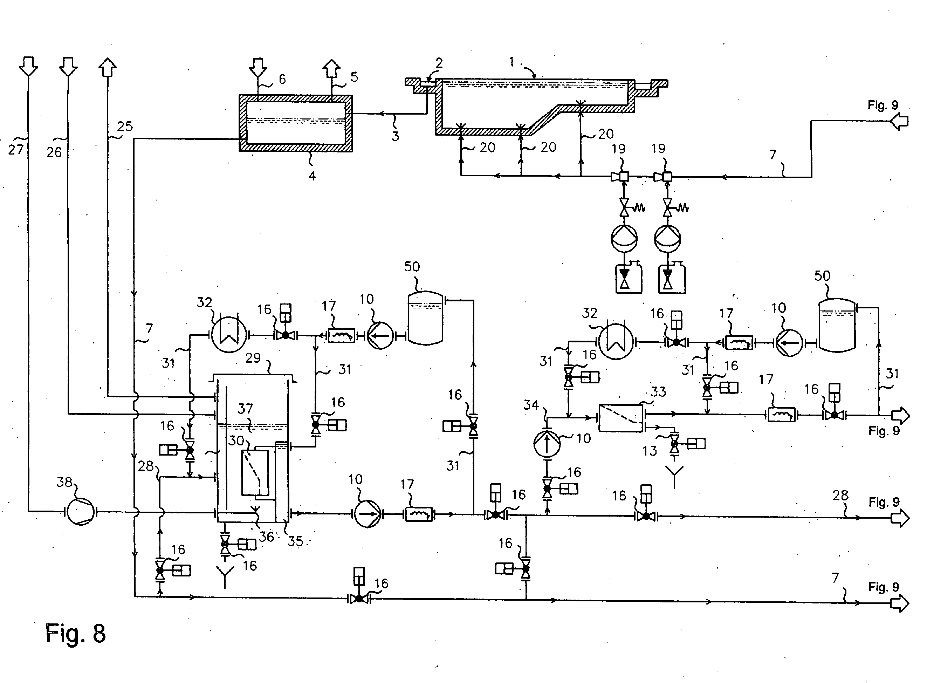

In order to ensure the correct chlorine content in the water in the basin, it is preferred that the main flow circulates from the basin to a compensation tank 4, as shown in figs. 5 and 8 and onwards to the filtration system and back to the basin. In this main flow, chlorine and acidic additives may be added to regulate the chlorine and pH-values in the basin.

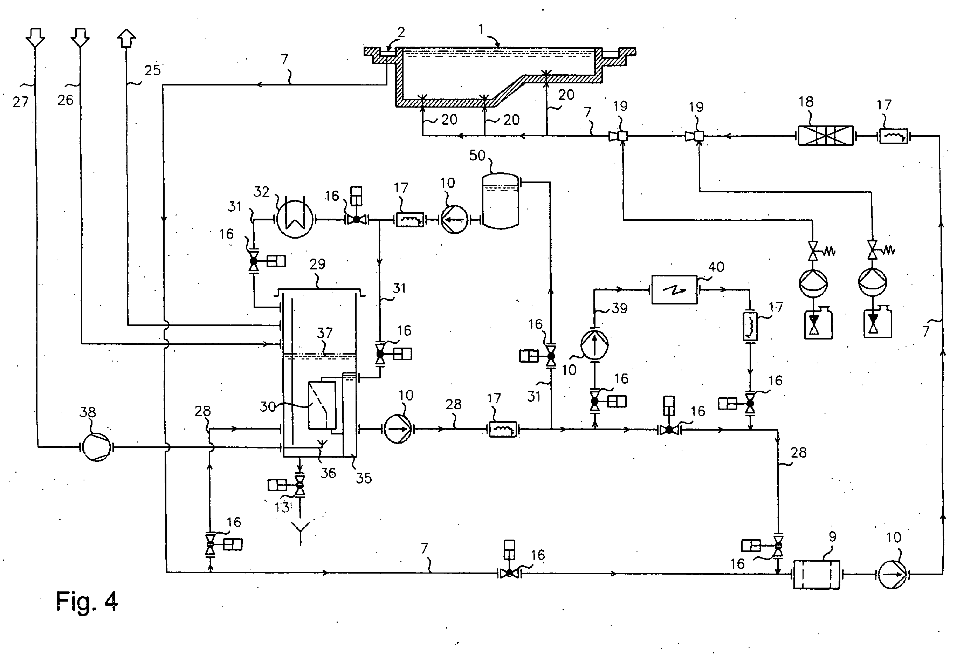

Fig. 4 shows a pool 1 with an overflow drain 2, which through a flow pipe 7 is connected to a vacuum membrane filter 29. The vacuum membrane filter 29 is mounted on a by-pass first sub flow 28 with regulating valves 16 making it possible to direct the entire main flow or a partial flow of the main flow through the membrane filter. The vacuum membrane filter 29 is provided with a fresh water supply 26, an air inlet pipe 27 and an air outlet 25 at the top. The vacuum membrane filter 29 is mounted in a by-pass arrangement, which is regulated by the valve 16 in the main flow 7 (in the bottom of fig. 4). The vacuum membrane filter 29, which may also function as a compensation tank, comprises an inlet compartment for the pool water in the sub-flow 28. From the inlet chamber, the water flows to the filter chamber in which the vacuum membrane element 30 is mounted comprising a number of vacuum membranes. With the air pump or blower 38 air is blown through air inlets 36 into the water-filled filter chamber below the membrane element 30, so that the vacuum membranes in the membrane element 30 are set in motion so that clogging of the filter membranes is avoided. A drain with a drain valve 13 is provided at the bottom. The vacuum membrane element is connected to a vacuum compartment 35, which again is connected to the sub-flow pipe 28 wherein a pump 10, a flow gauge 17 and a regulating valve 16 are provided. A CIP (Cleaning-In-Process) container 50 is via a by-pass pipe 31 with a regulating valve 16 connected to the sub-flow pipe 28. On the return flow rinsing pipe 31 from the CIP container 50 there is mounted a return rinsing pump 10 and flow gauge 17 and a regulating valve 16 and connected via the heat exchanger 32 for thermal disinfection to the inlet chamber of the vacuum membrane filter 29.

From the first sub-flow 28 a second sub-flow 39 is produced, which is subjected to photochemical treatment in the UV-radiation tank 40, as explained above with reference to figures 2 and 3. Afterwards, the UV-radiated water is returned to the first sub-flow 28 and returned to the main flow 7. In the main flow 7 downstream the return entry of the first sub-flow 28, a hair filter 9 and afterwards a pump 10 are provided to maintain the hydraulic flow currents in the pool 1. Besides a flow measurement device 17 and a heat exchanger 37 for ensuring the correct temperature of the pool water, there are provided chemical dosage injectors 19 on the main flow string 7 for providing chlorine and adjusting the pH-content in the water before the filter processed water is returned via the inlet pipes 20 to the pool 1.

Fig. 5 shows a pool 1 with an overflow drain 2, which through a flow pipe 7 is connected to a pressure membrane filter 33. In the main flow 7 upstream the diversion of the sub-flow 34, a hair filter 9 and afterwards a pump 10 and a mechanical pre-filter 23 are provided to maintain the hydraulic flow currents in the pool 1. The pressure membrane filter 33 is mounted on a by-pass sub flow 34 with regulating valves 16 making it possible to direct the entire main flow or a partial flow of the main flow through the membrane filter. The pressure membrane filter 33 is mounted in a by-pass arrangement, which is regulated by the valve 16 in the main flow 7 (in the bottom of fig. 5). A drain 12 with a drain valve 13 is provided at the filter.

The pressure membrane filter 33 is connected to the sub-flow pipe 34 wherein a pump 10, a flow gauge 17 and a regulating valve 16 are provided. A CIP (Cleaning-In-Process) container 50 is via a by-pass pipe 31 with a regulating valve 16 connected to the sub-flow pipe 34. On the return flow rinsing pipe 31 from the CIP container 50 there is mounted a return rinsing pump 10 and flow gauge 17 and a regulating valve 16 and connected via the heat exchanger 32 for thermal disinfection to the pressure membrane filter 33.

From the sub-flow 34, a sub-flow 39 is produced, which is subjected to photochemical treatment in the UV-radiation tank 40, as explained above with reference to figures 2 and 3. Afterwards, the UV-radiated water is returned to the first sub-flow 34 and returned to the main flow 7. Besides a flow measurement device 17 and a heat exchanger 37 for ensuring the correct temperature of the pool water, there are provided chemical dosage injectors 19 on the main flow string 7 for providing chlorine and adjusting the pH-content in the water before the filter processed water is returned via the inlet pipes 20 to the pool 1.

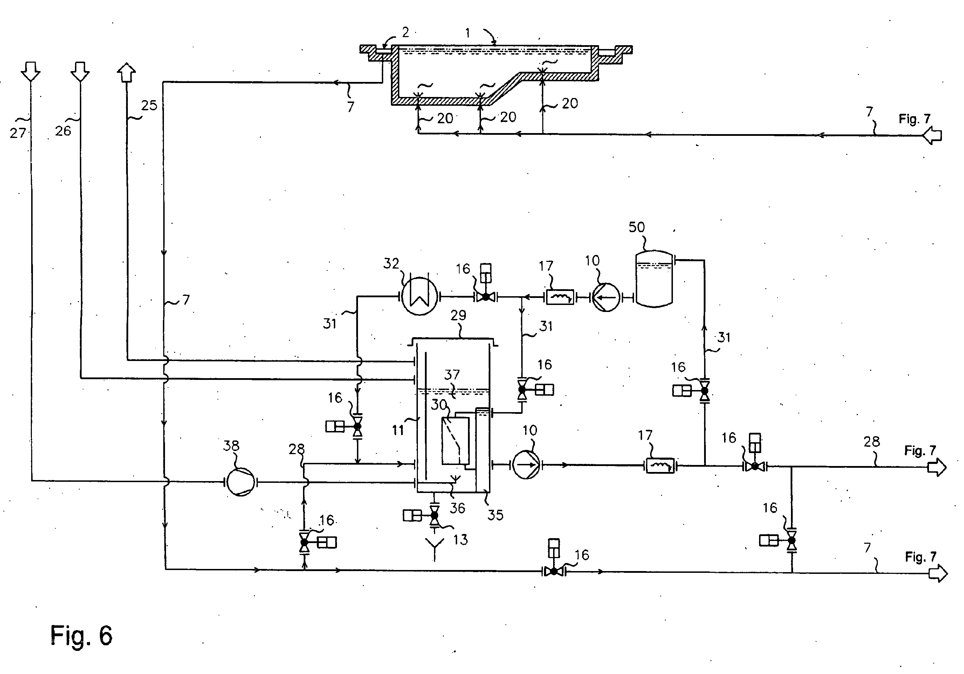

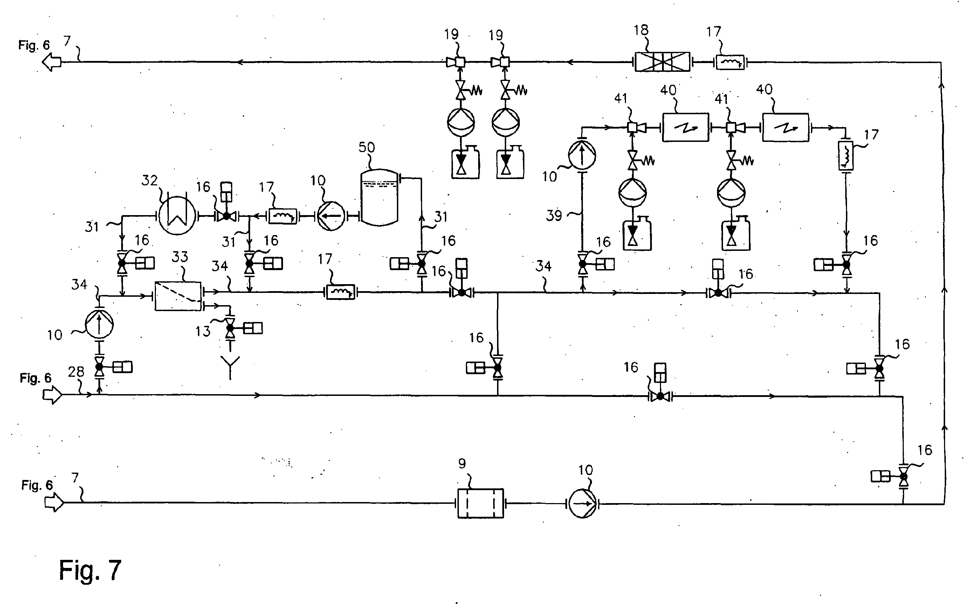

In figures 6 and 7, an embodiment of the filtration system is shown, where both a vacuum membrane filter 29 and a pressure membrane filter 33 are provided in series making it possible to process at least sub-flows of the water in both filters. As can be seen in figure 7, a photochemical processing section is inserted in the second sub-flow 34 downstream the pressure membrane filter means 33. The photochemical treatment system includes in the shown embodiment two UV radiation tanks arranged in series. In this embodiment, it is advantageous to provide a chemical injection of different additives prior to each UV radiation processing. Accordingly, it is preferred that chlorine is added in the first dosage injector 41 and hydrogen peroxide is provided in the second dosage injector 41 downstream the first UV-radiation tank 40 and just before the second UV-radiation tank 40.

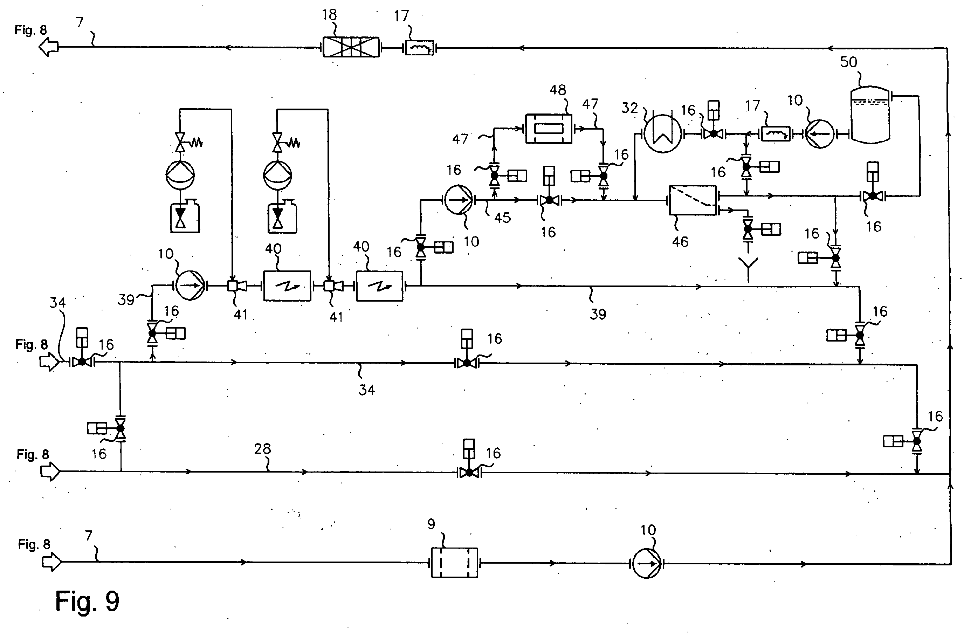

In figures 8 and 9, an extended embodiment of the filtration system is shown. As in the embodiment in figures 6 and 7, the embodiment in figures 8 and 9 also include a vacuum membrane filter 29 in a first sub-flow 28, succeeded by a pressure membrane filter 33 in a second sub-flow 34 and a photochemical processing sub-flow 39 after the membrane filters. In figure 8 and 9, a further fourth sub-flow 45 is diverted off the sub-flow 39 for photochemical treatment after the UV-radiation. This fourth sub-flow feeds at least a partial sub-flow through an osmosis filter treatment, as explained above in relation to figure 2 and 3.

The water of this fourth sub-flow is passed through at least one reverse osmosis filter 46 and returned to previous diverted sub-flows and that are reassembled and returned the main flow 7. A drainage system for discharging the retained particles in the osmosis filter is also provided. The reverse osmosis filter 46 may be provided with a thermal disinfection flow string, as explained above in relation to the membrane filters.

In the embodiment shown in fig. 9, absorption filter means are inserted in the fourth sub-flow 45. Accordingly, a fifth sub-flow 47 is branched off and at least a partial flow of the fourth water flow (preferably maximum 50% thereof) is passed through the absorption filter 48. This absorption filter 48 is an active carbon filter.

According to the embodiments, a first sub-flow of maximum 50% of the main flow from the basin is preferably taken out of the main flow and processed in the nano-membrane filtration sub-system,. From this first sub-flow, a second sub-flow of up to 50% of the first sub-flow is subsequently processed in the photochemical processing system. Downstream the photochemical processing system, a third sub-flow of up to 50% of the second sub-flow is taken out of the second sub-flow and led through an absorption filter and preferably also a reverse osmosis filter.

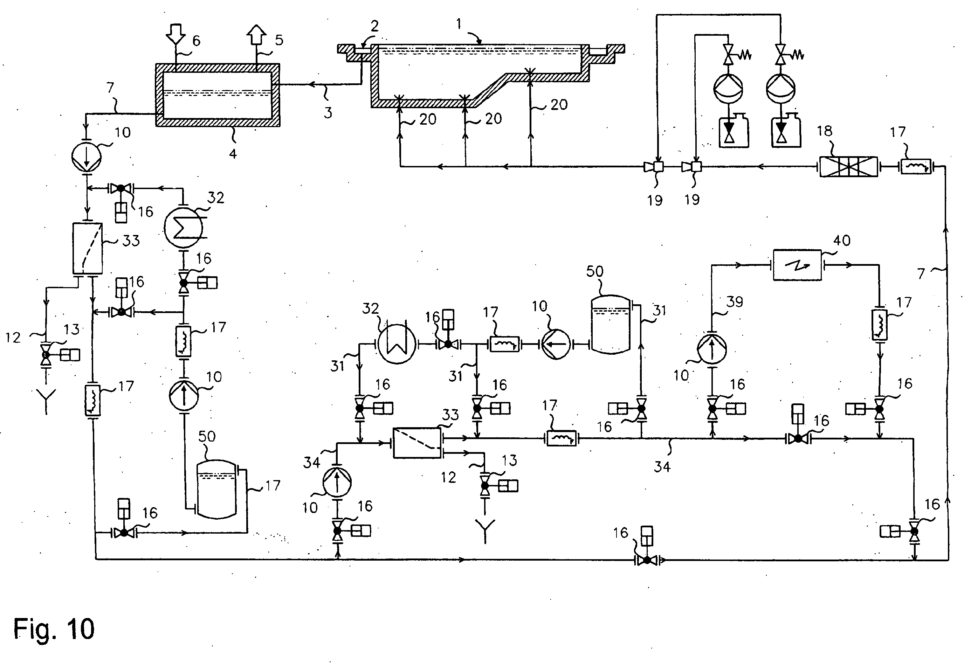

In fig. 10 an embodiment of the invention is shown, where a pressure membrane filter 33 is provided in the main flow 7 thereby also serving the function of a pre-filter. This pressure membrane filter 33 is preferably provided with a thermal disinfection return-flow system, as described above. Downstream this first pressure membrane pre-filter 33, a sub-flow 34 is diverted off from the main flow 7. This sub flow 34 is passed through a pressure membrane filter 33 and subsequently at least a second sub-flow is subjected to photochemical treatment in a UV radiation tank.

### Examples

Comparative tests were performed fore comparing a conventional water purification method (see fig. 1) with a water purification method according to the invention for purifying water in a swimming pool (see figs. 2 and 3).

In the method according to fig. 1, the water is passed through a first filtration in a sand filter using a flocculation chemical and subsequently through an absorption filter using hard coal as absorption material.

In a method according to the invention as shown in figs. 2 and 3, the water is filtered through vacuum membrane filter means, whereafter a first sub-flow is subjected to nano-membrane filter. Subsequently, from this first sub-flow, a second sub-flow is divided, which is subjected to an advanced photochemical treatment. Subsequently, from this second sub-flow, a third sub-flow is divided, which is subjected to a reverse osmosis filtration.

The results of these tests are presented in the tables A and B where minimum, maximum and mean values are mentioned.

| **Description, table A** | **Unit** | **Mean value** | **Medium** | **Maximum** | **Minimum** | **Limit value** |
|---|---|---|---|---|---|---|
| Number of measurement | n | 105 | 105 | 105 | 105 | |
| Circulation rate 212 m³/h, basin volume 106 m³ | Amount/h | 4 | 4 | 4 | 4 | |
| Amount of germs 22°C | cfu/100ml | 7 | < 1 | 563 | <1 | <1000 |
| Amount of germs 37 °C | cfu/100ml | 3 | <1 | 290 | <1 | <1000 |
| Escherichia coli | cfu/500ml | <1 | <1 | < 1 | < 1 | < 1 |
| Enterococcus | cfu/500ml | <1 | <1 | <1 | <1 | <1 |
| Staphylococcus | cfu/500ml | <1 | <1 | <1 | <1 | <1 |
| Pseudomonas aeruginosa | cfu/100ml | 1 | <1 | 8 | <1 | <1 |
| Legionella pneumophila | cfu/1000ml | 2 | <1 | 180 | <1 | <1 |
| Water temperature | °C | 36,1 | 36,7 | 38 | 34,1 | 37 |
| Molecular chlorine (free chlorine) | mg/l | 0,96 | 0,97 | 1,90 | 0,60 | 3,00 |
| Chloramines (fixed chlorine) | mg/l | 0,34 | 0,36 | 1,40 | 0,20 | 1,00 |
| pH value | pH | 7,30 | 7,27 | 8,30 | 7,10 | > 7,0 - < 8,0 |
| Redox, reference Ap/AgCl | mV | 726 | 720 | 770 | 640 | > 760 |
| Trihalomethanes, (THM) | µg/l | 63 | 58 | 480 | 20 | < 50 |
| Adsorbable organic halogenes (AOX) | µg/l | 460 | 510 | 1760 | 321 | |
| non-volatile organic carbon, pool water, NVOC | mg/C/l | 2,8 | 2,7 | 3,1 | 2,5 | |
| non-volatile organic carbon, drinking water, NVOC | mg/C/l | 1,6 | 1,6 | 1,6 | 1,6 | |
| Ammonia NH₄ | mg/l | 0,015 | 0,012 | 0,030 | 0,01 | |
| Nitrate NO₃ | mg/l | 1,40 | 1,38 | 1,58 | 1,32 | 20 |
| Phosphate PO4 | mg/l | 0,005 | 0.008 | 0,65 | 0,001 | |
| Turbidity pool water | FNU | 0,27 | 0,26 | 0,31 | 0,19 | 0,5 |

| **Description, table B** | **Unit** | **Mean value** | **Medium** | **Maximum** | **Minimum** | **Limit value** |
|---|---|---|---|---|---|---|
| Number of measurement | n | 105 | 105 | 105 | 105 | |
| Circulation rate 212 m³/h, basin volume 106 m³ | Amount/h | 0,5 | 0,5 | 0,5 | 0,5 | |
| Amount of germs 22 °C | cfu/100ml | <1 | < I | 3 | <1 | < 1000 |
| Amount of germs 37 °C | cfu/100ml | <1 | <1 | < 1 | <1 | <1000 |
| Escherichia coli | cfu/500ml | <1 | <1 | <1 | <1 | <1 |
| Enterococcus | cfu/500ml | < 1 | < 1 | <1 | <1 | < 1 |
| Staphylococcus | cfu/500ml | < 1 | < 1 | < 1 | < 1 | < 1 |
| Pseudomonas aeruginosa | cfu/100ml | 1 | < 1 | 8 | < 1 | < 1 |
| Legionella pneumophila | cfu/1000ml | < 1 | < 1 | < 1 | < 1 | < 1 |
| Water temperature | °C | 36,2 | 36,9 | 37,5 | 35,2 | 37 |
| Molecular chlorine (free chlorine) | mg/l | 0,45 | 0,42 | 0,70 | 0,30 | 3,00 |
| Chloramines (fixed chlorine) | mg/l | 0,06 | 0,05 | 0,17 | 0,00 | 1,00 |
| pH value | pH | 7,01 | 7,05 | 7,19 | 6,85 | > 7,0 - < 8,0 |
| Redox, reference Ag/AgCl | mV | 840 | 835 | 860 | 795 | > 760 |
| Trihatomethanes, (THM) | µg/l | < 10 | < 10 | 28 | < 10 | < 50 |
| Adsorbable organic halogens (AOX) | µg/l | < 10 | < 10 | 56 | < 10 | |
| non-volatile organic carbon, pool water, NVOC | mg/C/l | 2,8 | 2,7 | 3,1 | 2,5 | |
| non-volatile organic carbon, drinking water, NVOC | mg/C/l | 1,6 | 1,6 | 1,6 | 1,6 | |
| Ammonia NH₄ | mg/l | 0,015 | 0,012 | 0,030 | 0,01 | |
| Nitrate N0₃ | mg/l | 1,12 | 1,05 | 1,47 | 0,92 | 20 |
| Phosphate PO4 | mg/l | 0,001 | 0,001 | 0,002 | 0,001 | |
| Turbidity pool water | FNU | < 0,10 | < 0,10 | 0,12 | 0,10 | 0,5 |

The improved purification of water by the method according to the invention, it is only necessary to supply a fresh water amount corresponding to maximum 10 litres per person whereas a minimum of 30 litres per person is necessary by the traditional filtration method and it is common for most sand filter filtration systems to use as much as 120 litres per person of fresh water.

The improved purification also makes it possible to reduce the circulation rate of the water, i.e. the amount of times necessary to treat the water to reduce the content of undesired substances to below an acceptable level.

Accordingly, it is found that the filtration of the water can be reduced from e.g. 2.0 times the pool content per hour as necessary by traditional sand filter solutions to 0.5 times per hour by a total membrane solution and photochemical treatment.

Above are shown some preferred embodiments with reference to the drawings exemplifying some aspects of the invention. However, it is realised that further embodiments with different combinations of filter types may be provided without departing from the scope of the invention, which is defined in the accompanying claims.

### Reference numbers:

- 1: Basin, such as a swimming pool
- 2: Overflow drain
- 3: Flow path
- 4: Compensation tank
- 5: Ventilation duct
- 6: Fresh water supply
- 7: Flow pipe
- 8: Sand filter
- 8a: Active carbon sand filter
- 9: Hair-filter
- 10: Pump
- 11: Dosage injector
- 12: Drain flow
- 13: Valve
- 14: Drain
- 15: Flow pipe
- 16: Regulating valve
- 17: Flow measurement device
- 18: Heat exchanger
- 19: Chemical dosage injector
- 20: Return water inlet pipe
- 21: Sub-flow pipe
- 22: Return flow pipe
- 23: Mechanical filter
- 24: Filter driving means
- 25: Air outlet pipe
- 26: Fresh water inlet pipe
- 27: Air inlet pipe
- 28: First sub-flow
- 29: Vacuum membrane filter
- 30: Vacuum membrane filter element
- 31: Disinfection flow pipe
- 32: Heat exchanger
- 33: Pressure membrane filter
- 34: Second sub-flow
- 35: Vacuum compartment
- 36: Air inlet
- 37: Water level
- 38: Air pump
- 39: Third sub-flow
- 40: UV radiation tank
- 41: Dosage system
- 42: Chemical container
- 43: pumping means
- 44: Regulating valve
- 45: Forth sub-flow
- 46: Reverse osmosis filter
- 47: Fifth sub-flow
- 48: Absorption filter
- 49: Return tank (may be a water storage tank, the basin itself or a compensation tank)
- 50: CIP container

In figure 2:
- A: Tank
- B: Pre-filter means
- C: First membrane filtration means
- D: Second membrane filtration means
- E: Photochemical processing means
- F: Osmosis filter means
- G: Absorption filter means
- H: Return tank

## Claims

1. A method of purifying water from a basin, in particular a swimming pool, by circulating a water flow through a filtration system by pumping means, said method comprising the steps of:
filtrating a first flow, such as a sub-flow, of the water in first filtration means by passing said first flow through first membrane filter means, and subsequently
subjecting a partial second flow of this membrane filtrated water of said first flow to a photochemical treatment in a UV radiation system by irradiating said second flow with UV electromagnetic radiation before returned to the basin, and where the photochemical treatment includes radiating the partial second flow with UV radiation at least partially having a wave length below 260 nm, and that the radiation intensity is at least 50 mJ/cm², preferably at least 1000 mJ_{/}cm².

2. A method according to claim 1, whereby said membrane filter means are adapted to filtering particles of more than 3.0 to 0.001 µm.

3. A method according to claim 1 or 2, whereby the membrane filter means comprise first membrane filter means include a vacuum membrane filter where at least a partial water flow is passed through.

4. A method according to claim 3, whereby the membrane filter means further comprise second membrane filter means include a pressure membrane filter for nano-membrane filtration, through which at least a partial water flow of the filtered water flow from the first membrane filter means is passed.

5. A method according to any of the preceding claims, whereby the membrane filter means comprises membrane filters of the type having an ultra-filtration membrane, a micro-filtration membrane and/or a nano-filtration membrane.

6. A method according to any of the preceding claims, whereby air and fresh water is supplied to the membrane filter means, in particular the vacuum membrane filter means for oxidizing the water to be filtered.

7. A method according to any of the preceding claims, whereby the pumping means are arranged downstream the membrane filter means.

8. A method according to any of the preceding claims, whereby the photochemical treatment system includes adding oxidation chemicals to the water flow passing through the photochemical treatment system.

9. A method according to any of the preceding claims, whereby at least a partial flow of the photochemically treated water is passed through an absorption filter.

10. A method according to any of the preceding claims, whereby at least a partial flow of the photochemically treated water is passed through a reverse osmosis treatment system.

11. A method according to any of the preceding claims, whereby at least one filter in the filtration system is disinfected and/or regenerated by passing heated water through the filter.

12. A method according to any of the preceding claims, whereby the heated water is chloride water heated to a temperature of 60 °C to 120 °C.

13. A system for purifying water from a basin, in particular a swimming pool, by circulating a water flow through a filtration system by pumping means, said system comprising first filtration means filtrating at least a sub-flow of the water by passing the sub-flow through first membrane filter means, and subsequently
a UV radiation system subjecting a partial second flow of this membrane filtrated water of the sub-flow to a photochemical treatment by irradiating the partial second flow with UV electromagnetic radiation before returned to the basin, and wherein the photochemical treatment means include means for radiating the partial second flow with UV radiation at least partially having a wave length below 260 nm with a radiation intensity of at least 50 mJ/cm², preferably at least 1000 mJ/cm².

14. A system according to claim 15, wherein said membrane filter means are adapted to filtering particles of more than 0.01 to 0.001 µm.

15. A system according to claim 13 or 14, wherein the membrane filter means include first membrane filter means including a vacuum membrane filter where at least a partial water flow is passed through.

16. A system according to claim 15, wherein the membrane filter means include second membrane filter means including a pressure membrane filter for nano-membrane filtration, through which at least a partial water flow of the filtered water flow from the first membrane filter means is passed.

17. A system according to any of the claims 13 to 16, wherein the membrane filter means include membrane filters of the type having a nano-filtration, an ultra-filtration membrane or a micro-filtration membrane.

18. A system according to any of the claims 13 to 17, wherein means for supplying air and fresh water to the membrane filter means, in particular the vacuum membrane filter means for oxidizing the water to be filtered are provided.

19. A system according to any of the claims 13 to 18, wherein the pumping means are arranged downstream the membrane filter means.

20. A system according to any of the claims 13 to 19, wherein the photochemical treatment system includes adding oxidation chemicals to the water flow passing through the photochemical treatment system.

21. A system according to any of the claims 13 to 20, at least a partial flow of the photochemically treated water is passed through a reverse osmosis treatment system.

22. A system according to any of the claims 13 to 21, wherein at least one filter in the filtration system is disinfected and/or regenerated by passing heated water through the filter.

23. A system according to any of the claims 13 to 22, wherein the heated water is chloride water heated to a temperature of 80 °C to 120 °C.

## Patentansprüche

1. Verfahren zur Reinigung von Wasser aus einem Becken, insbesondere aus einem Schwimmbecken, durch Zirkulieren eines Wasserflusses durch ein Filtersystem mittels Pumpmittel, wobei das Verfahren die Schritte umfasst:
Filtern eines ersten Wasserflusses, wie beispielsweise eines untergeordneten Flusses, in einem ersten Filtermittel durch Hindurchleiten des ersten Flusses durch erste Membranfiltermittel, und anschließend
Aussetzen eines zweiten Teilflusses des membranfiltrierten Wassers des ersten Flusses einer photochemischen Behandlung in einem UV-Strahlungssystem durch Bestrahlen des zweiten Flusses mit elektromagnetischer UV-Strahlung bevor er in das Becken zurückgeführt wird, wobei die photochemische Behandlung Bestrahlen des zweiten Teilflusses mit UV-Strahlung umfasst, die zumindest teilweise eine Wellenlänge von unter 260 nm aufweist und wobei die Strahlungsintensität mindestens 50 mJ/cm² beträgt, vorzugsweise mindestens 1000 mJ/cm²_{.}

2. Verfahren nach Anspruch 1, wobei die Membranfiltermittel angepasst sind, Partikel von mehr als 3 bis 0,001 µm zu filtern.

3. Verfahren nach einem der Ansprüche 1 oder 2, wobei die Membranfiltermittel erste Membranfiltermittel umfassen, die einen Vakuummembranfilter beinhalten, durch den zumindest ein Teil des Wasserflusses geleitet wird.

4. Verfahren nach Anspruch 3, worin die Membranfiltermittel weiterhin zweite Membranfiltermittel umfassen, die einen Druckmembranfilter für eine Nano-Membranfiltrierung beinhalten, durch den zumindest ein Teil des Wasserflusses des filtrierten Wasserflusses aus den ersten Membranfiltermitteln geleitet wird.

5. Verfahren nach einem der vorstehenden Ansprüche, wobei die Membranfiltermittel Membranfilter der Art mit einer Ultrafiltrationsmembran, einer Mikrofiltrationsmembran und/oder einer Nanofiltrationsmembran umfassen.

6. Verfahren nach einem der vorstehenden Ansprüche, wobei Luft und Frischwasser den Membranfiltermitteln zugeführt werden, insbesondere dem Vakuummembranfiltermittel, um das zu filternde Wasser zu oxidieren.

7. Verfahren nach einem der vorstehenden Ansprüche, wobei die Pumpmittel stromabwärts der Membranfiltermittel angeordnet sind.

8. Verfahren nach einem der vorstehenden Ansprüche, wobei das photochemische Behandlungssystem Zugabe von Oxidierungschemikalien zu dem Wasserfluss beinhaltet, der durch das photochemische Behandlungssystem gelangt.

9. Verfahren nach einem der vorstehenden Ansprüche, wobei mindestens ein Teilfluss des photochemisch behandelten Wassers durch einen Absorptionsfilter gelangt.

10. Verfahren nach einem der vorstehenden Ansprüche, wobei mindestens ein Teilfluss des photochemisch behandelten Wassers durch ein Behandlungssystem mit umgekehrter Osmose fließt.

11. Verfahren nach einem der vorstehenden Ansprüche, wobei mindestens ein Filter in dem Filtersystem durch Durchleiten von heißem Wasser durch den Filter desinfiziert und/oder regeneriert wird.

12. Verfahren nach einem der vorstehenden Ansprüche, wobei das heiße Wasser Chloridwasser ist, das auf eine Temperatur von 60°C bis 120°C erhitzt wurde.

13. System zur Reinigung von Wasser aus einem Becken, insbesondere aus einem Schwimmbecken, durch Zirkulieren eines Wasserflusses durch ein Filtersystem durch Pumpmittel, worin das System umfasst
erste Filtermittel, die mindestens einen untergeordneten Wasserfluss durch Durchleiten des untergeordneten Flusses durch erste Membranfiltermittel filtern, und nachfolgend
ein UV-Strahlensystem, das einen zweiten Teilfluss des membranfiltrierten Wassers des untergeordneten Flusses einer photochemischen Behandlung durch Bestrahlen des zweiten Flusses mit elektromagnetischer UV-Strahlung aussetzt, bevor er in das Becken zurückgeführt wird, wobei die photochemischen Behandlungsmittel Mittel zum Bestrahlen des zweiten Teilflusses mit UV-Strahlung beinhalten, die zumindest teilweise eine Wellenlänge von unter 260 nm mit einer Strahlungsintensität von mindestens 50 mJ/cm², vorzugsweise mindestens 1000 mJ/cm² aufweist.

14. System nach Anspruch 13, worin die Membranfiltermittel angepasst sind, Partikel von mehr als 0,01 bis 0,001 µm zu filtern.

15. System nach einem der Ansprüche 13 oder 14, worin die Membranfiltermittel erste Membranfiltermittel umfassen, die einen Vakuummembranfilter beinhalten, durch den zumindest ein Teil des Wasserflusses geleitet wird.

16. System nach Anspruch 15, worin die Membranfiltermittel zweite Membranfiltermittel umfassen, die einen Druckmembranfilter für eine Nano-Membranfiltrierung beinhalten, durch den zumindest ein Teil des Wasserflusses des filtrierten Wasserflusses aus den ersten Membranfiltermitteln geleitet wird.

17. System nach einem der Ansprüche 13-16, worin die Membranfiltermittel Membranfilter der Art mit einer Ultrafiltrationsmembran, einer Mikrofiltrationsmembran und/oder einer Nanofiltrationsmembran umfassen.

18. System nach einem der Ansprüche 13-17, worin Mittel zum Zuführen von Luft und Frischwasser an den Membranfiltermitteln, insbesondere dem Vakuummembranfiltermittel, bereitgestellt sind, um das zu filternde Wasser zu oxidieren.

19. System nach einem der Ansprüche 13-18, worin die Pumpmittel stromabwärts der Membranfiltermittel angeordnet sind.

20. System nach einem der Ansprüche 13-19, worin das photochemische Behandlungssystem Zugabe von Oxidierungschemikalien zu dem Wasserfluss beinhaltet, der durch das photochemische Behandlungssystem fließt.

21. System nach einem der Ansprüche 13-20, worin mindestens ein Teilfluss des photochemisch behandelten Wassers durch ein Behandlungssystem mit umgekehrter Osmose fließt.

22. System nach einem der Ansprüche 13-21, worin mindestens ein Filter in dem Filtersystem durch Durchleiten von heißem Wasser durch den Filter desinfiziert und/oder regeneriert wird.

23. System nach einem der Ansprüche 13-22, worin das heiße Wasser Chloridwasser ist, das auf eine Temperatur von 60°C bis 120°C erhitzt wurde.

## Revendications

1. Procédé de purification de l'eau d'un bassin, en particulier d'une piscine, en faisant circuler un flux d'eau à travers un système de filtration par des moyens de pompage, ledit procédé comprenant les étapes consistant à :
filtrer un premier flux, comme un sous-flux, de l'eau, dans des premiers moyens de filtration, en faisant passer ledit premier flux à travers les premiers moyens de filtre à membrane, et ensuite
soumettre un second flux partiel de cette eau filtrée par membrane dudit premier flux, à un traitement photochimique dans un système de radiation UV, en irradiant ledit second flux avec une radiation électromagnétique UV avant le retour au bassin, et dans lequel le traitement photochimique comprend l'irradiation du second flux partiel avec une radiation UV, ayant au moins partiellement une longueur d'onde inférieure à 260 nm, et l'intensité de radiation étant d'au moins 50 mJ/cm², de préférence au moins 1000 mJ/cm²_{.}

2. Procédé selon la revendication 1, dans lequel lesdits moyens de filtre à membrane sont adaptés pour filtrer des particules de plus de 3,0 à 0,001 µm.

3. Procédé selon la revendication 1 ou 2, dans lequel les moyens de filtre à membrane comprennent de premiers moyens de filtre à membrane comprenant un filtre à membrane sous vide, à travers lequel passe au moins un flux d'eau partiel.

4. Procédé selon la revendication 3, dans lequel les moyens de filtre à membrane comprennent en outre de seconds moyens de filtre à membrane comprenant un filtre à membrane sous pression, pour filtration de nano-membrane, à travers lequel passe au moins un flux d'eau partiel du flux d'eau filtrée provenant des premiers moyens de filtre à membrane.

5. Procédé selon l'une quelconque des revendications précédentes, dans lequel les moyens de filtre à membrane comprennent des filtres à membrane du type ayant une membrane d'ultrafiltration, une membrane de microfiltration et/ou une membrane de nano-filtration.

6. Procédé selon l'une quelconque des revendications précédentes, dans lequel l'air et l'eau fraîche sont amenés aux moyens de filtre à membrane, en particulier les moyens de filtre à membrane sous vide, pour oxyder l'eau à filtrer.

7. Procédé selon l'une quelconque des revendications précédentes, dans lequel les moyens de pompage sont disposés en aval des moyens de filtre à membrane.

8. Procédé selon l'une quelconque des revendications précédentes, dans lequel le système de traitement photochimique comprend l'addition de produits chimiques d'oxydation au flux d'eau passant à travers le système de traitement photochimique.

9. Procédé selon l'une quelconque des revendications précédentes, dans lequel au moins un flux partiel de l'eau photochimiquement traitée passe à travers un filtre d'absorption.

10. Procédé selon l'une quelconque des revendications précédentes, dans lequel au moins un flux partiel de l'eau photochimiquement traitée passe à travers un système de traitement par osmose inverse.

11. Procédé selon l'une quelconque des revendications précédentes, dans lequel au moins un filtre dans le système de filtration est désinfecté et/ou régénéré, en faisant passer l'eau chauffée à travers le filtre.

12. Procédé selon l'une quelconque des revendications précédentes, dans lequel l'eau chauffée est une eau de chlorure chauffée à une température de 60°C à 120°C.

13. Système visant à purifier l'eau provenant d'un bassin, en particulier d'une piscine, en faisant circuler un flux d'eau à travers un système de filtration, par des moyens de pompage, ledit système comprenant des premiers moyens de filtration filtrant au moins un sous-flux de l'eau, en faisant passer le sous-flux à travers les premiers moyens de filtre à membrane et ensuite,
un système de radiation UV soumettant un second flux partiel de cette eau filtrée par membrane du sous-flux à un traitement photochimique, en irradiant le second flux partiel avec une radiation électromagnétique UV, avant le retour au bassin, et dans lequel les moyens de traitement photochimique comprennent des moyens pour irradier le second flux partiel avec une radiation UV, ayant au moins partiellement une longueur d'onde inférieure à 260 nm, avec une intensité de radiation d'au moins 50 mJ/cm², de préférence au moins 1000 mJ/cm².

14. Système selon la revendication 15, dans lequel lesdits moyens de filtre à membrane sont adaptés pour filtrer des particules de plus de 0,01 à 0,001 µm.

15. Système selon la revendication 13 ou 14, dans lequel les moyens de filtre à membrane comprennent de premiers moyens de filtre à membrane, comprenant un filtre à membrane sous vide, à travers lequel passe au moins un flux d'eau partiel.

16. Système selon la revendication 15, dans lequel les moyens de filtre à membrane comprennent de seconds moyens de filtre à membrane comprenant un filtre à membrane sous pression pour une filtration à nano-membrane, à travers lequel passe au moins un flux d'eau partiel du flux d'eau filtrée provenant des premiers moyens de filtre à membrane.

17. Système selon l'une quelconque des revendications 13 à 16, dans lequel les moyens de filtre à membrane comprennent des filtres à membrane du type ayant une membrane de nano-filtration, d'ultrafiltration ou de microfiltration.

18. Système selon l'une quelconque des revendications 13 à 17, dans lequel des moyens pour fournir de l'air et de l'eau fraîche aux moyens de filtre à membrane, en particulier les moyens de filtre à membrane sous vide, pour oxyder l'eau à filtrer, sont fournis.

19. Système selon l'une quelconque des revendications 13 à 18, dans lequel les moyens de pompage sont disposés en aval des moyens de filtre à membrane.

20. Système selon l'une quelconque des revendications 13 à 19, dans lequel le système de traitement photochimique comprend l'addition de produits chimiques d'oxydation au flux d'eau passant à travers le système de traitement photochimique.

21. Système selon l'une quelconque des revendications 13 à 20, au moins un flux partiel de l'eau photochimiquement traitée passant à travers un système de traitement par osmose inverse.

22. Système selon l'une quelconque des revendications 13 à 21, dans lequel au moins un filtre dans le système de filtration est désinfecté et/ou régénéré, en faisant passer de l'eau chauffée à travers ledit filtre.

23. Système selon l'une quelconque des revendications 13 à 22, dans lequel l'eau chauffée est de l'eau de chlorure chauffée à une température de 80°C à 120°C.
